# EUROPEAN PATENT APPLICATION

(11) **EP 0 829 595 A2**
(43) Date of publication of application: **18.03.1998**
(21) Application number: 97307235.8
(22) Date of filing: 16.09.1997
(51) Int. Cl.: E04F 19/04

(54) **Edging strip**

(30) Priority: 16.09.1996 ZA 9607786
(71) Applicant: Gerstmeier, Hans Albert, Kwa Zulu Natal, Durban North 4051 (ZA)
(72) Inventor: Gerstmeier, Hans Albert, Kwa Zulu Natal, Durban North 4051 (ZA)
(74) Representative: Downing, Michael Philip

(57) **Abstract**

A skirting, cornice or the like comprises a polymeric material and has a rear plate member adapted to be attached to a wall, hinged to a shaped front portion which has a rearwardly extending formation. This rearwardly extending formation is barbed and engaged a complementally shaped diamond on the rear plate which acts as a catch.

## Description

This invention relates to skirting, cornices, dado rails and also for picture frames.

Skirtings, cornices and dado rails have traditionally been made of either wood or by a moulding process using plaster of paris. Both of these involve a significance degree of semi-skilled labour and are costly and time-consuming procedures. Furthermore, the plaster of paris persons have difficulties with transportation allied to their brittle nature.

Consequently there has been a trend towards the use of moulded plastic skirtings, conduits and the like, usually comprising a pair of components which clip together.

It is an object of this invention to provide a skirting, conduit, cornice or the like which comprises an integral unit and which is easily located and fixed in position.

According to the invention, skirting or the like comprises a rear plate member adapted to be attached to a wall, the plate member being in hinged association with a shaped front portion including a rearwardly extending formation adapted to engage a complemental formation on the plate member.

In the preferred form of the invention, the front portion also includes at a low level, a formation which abuts the floor for example if the invention is applied to skirting.

The invention preferably comprises a suitable polymeric material.

The rearwardly extending formation preferably includes one or more hooked or barbed formations and is insertable into a complemental formation on the plate member comprising a channel. The channel may also include formations preventing removal of the inserted barbed formation. In one form both the rearwardly extending formation and the channel may include interengaging barbs on either side thereof. In the preferred form, only one side of each is barbed. This permits removal of the rearwardly extending formation by bending the opposite wall of the channel. This permits transport of the skirting in a closed form.

The depth of insertion of the barbed formation into the channel defines a separation distance between the front and rear portions, permitting introducing of electrical cabling or the like if desired.

In the preferred form of the invention, the front and rear portions are integral and the hinged association comprises a longitudinal line of reduced thickness, the inherent flexibility of the polymeric material permitting the required degree of bending.

In alternative form, a reinforced section may be provided adjacent the line of reduced thickness.

In one form of the invention, the hinge is located at the top of the rear plate while in an alternative form the rear plate includes a flange at the top end thereof, the flange being in hinged association with the front portion.

A short rearwardly extending flange may also be provided in either form of the invention to ensure a perfect fit against the wall when the rear plate is secured thereto.

The skirting of the invention finds equal application as a cornice or dado rail, and is very easy to assemble. The plate member may be provided with double sided pressure sensitive adhesive tape to facilitate positioning. The skirting is then fastened more permanently by nails, screws or the like which are simply hammered or otherwise forced through the rear plate into the wall.

The skirting of the invention may be manufactured in different sizes and shapes and in particular, a reduced size may be manufactured for use as an easy to assemble picture frame. The invention could be simply attached as described above to a backing material of a picture, photograph or painting.

In a further alternative form of the invention which finds particular application as a cornice, the front portion is concavely arcuate and this time a formation is provided which abuts the ceiling. The hinged association may be as is described above, but in this case is between a flange at the base of the rear plate and the front portion. A short rearwardly extending flange to ensure flush fitting against the wall is also provided.

An embodiment cf the invention is described below with reference to the accompanying drawings in which:
Figure 1 is a sectional side view through skirting according to the invention;
Figure 2 is a similar view completely assembled;
Figures 3 and 4 are similar views of an alternative embodiment;
Figures 5 and 6 are similar views through yet a further embodiment; and
Figures 7 and 8 are similar view of an embodiment find particular application as a cornice.

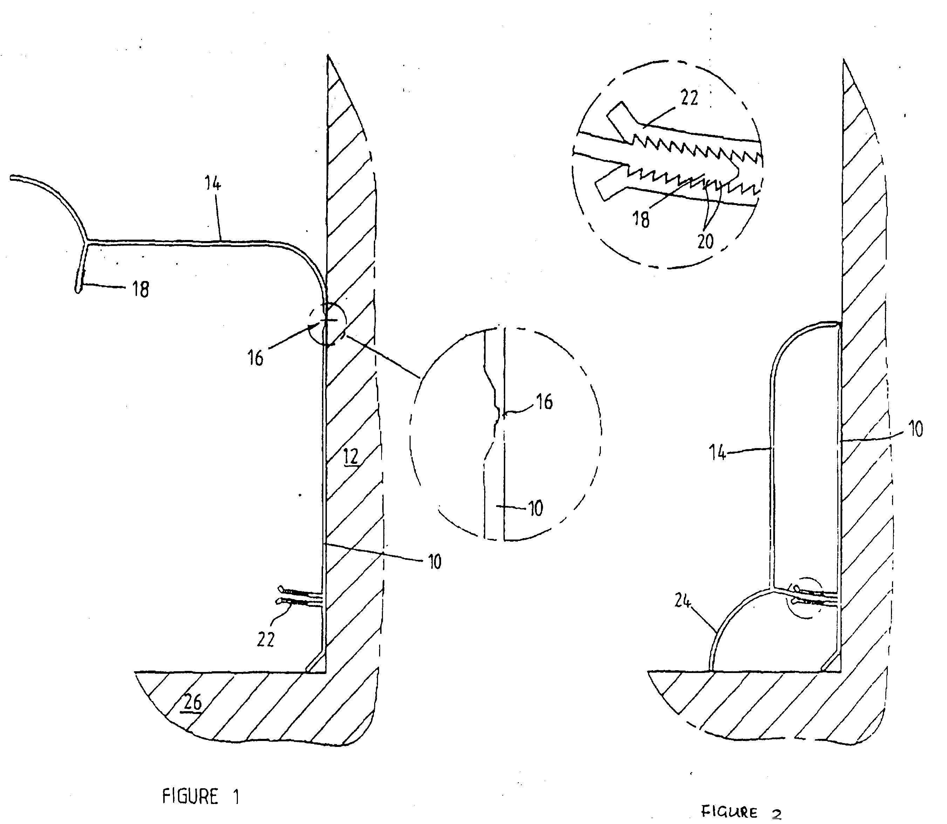

In the drawings skirting comprises a rear plate 10 which is attachable to wall 12 and a shaped front portion 14. The skirting comprises a polymeric material and includes an integral hinged section between the front and rear portion which consists of a longitudinal line of reduced thickness 16 as shown in the magnified area of Figure 1.

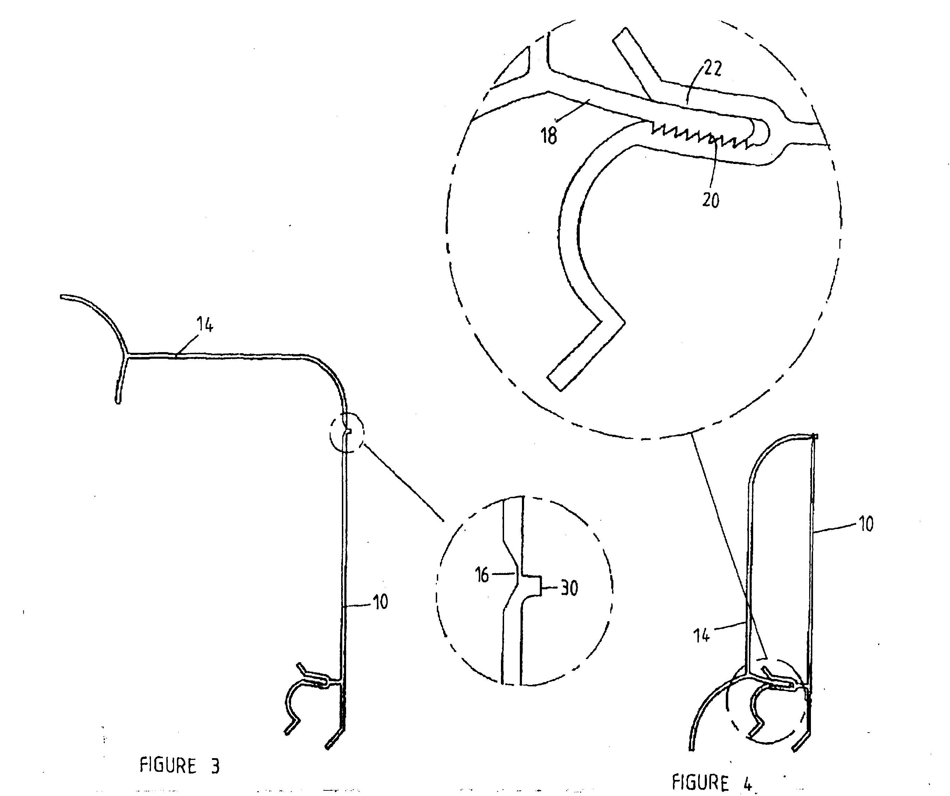

An alternative form of hinge is illustrated in Figure 3. This form includes a reinforced section 30 adjacent to the line of reduced thickness.

The front portion 14 has a rearwardly extending protrusion 18 which includes barbs 20. When the rear plate is firmly located on the wall, the front portion 14 is swung down so that the barbed protrusion engages a channelled formation 22 integral with the rear plate. The barbs prevent removal of the protrusion.

An alternative form of barbed protrusion is illustrated in Figure 4. This form does permit opening before the skirting is fixed to the wall and facilitates transportation in a closed form.

The front portion 14 includes a shaped formation 24 which extends to abut the floor 26.

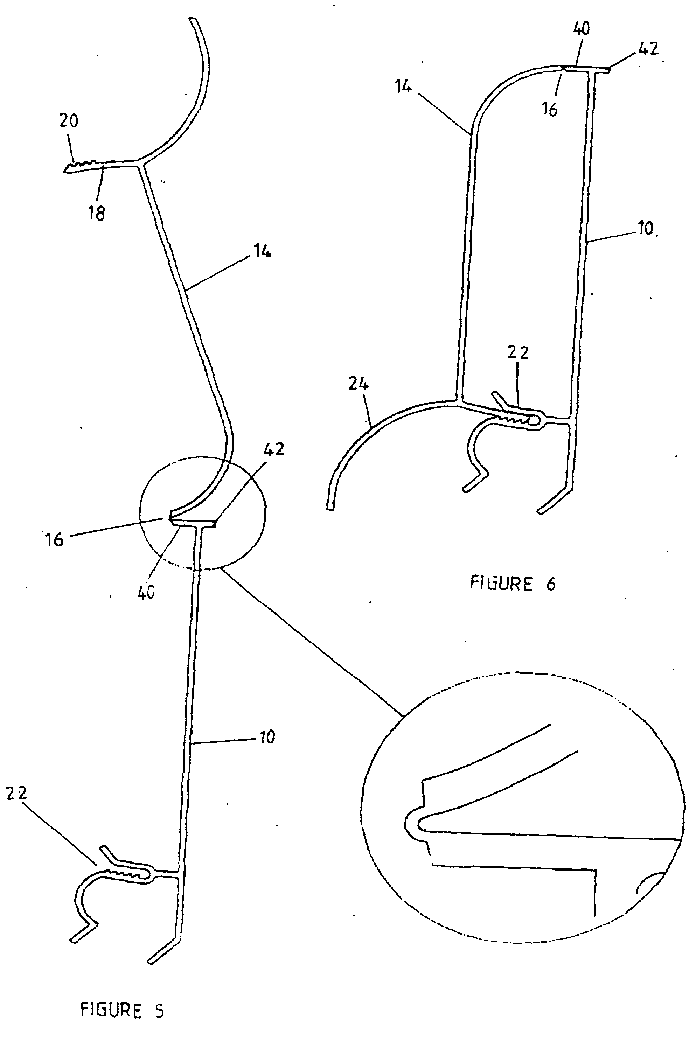

Turning now to Figures 5 and 6, an alternative embodiment is shown in which the rear plate has a flange 40 at the top end thereof and the hinge 16 in the form of a line of reduced thickness) is located between the flange and the front portion 14. Furthermore a short rearwardly extending flange 42 is also provided. This permits a flush fitting of the skirting against the wall.

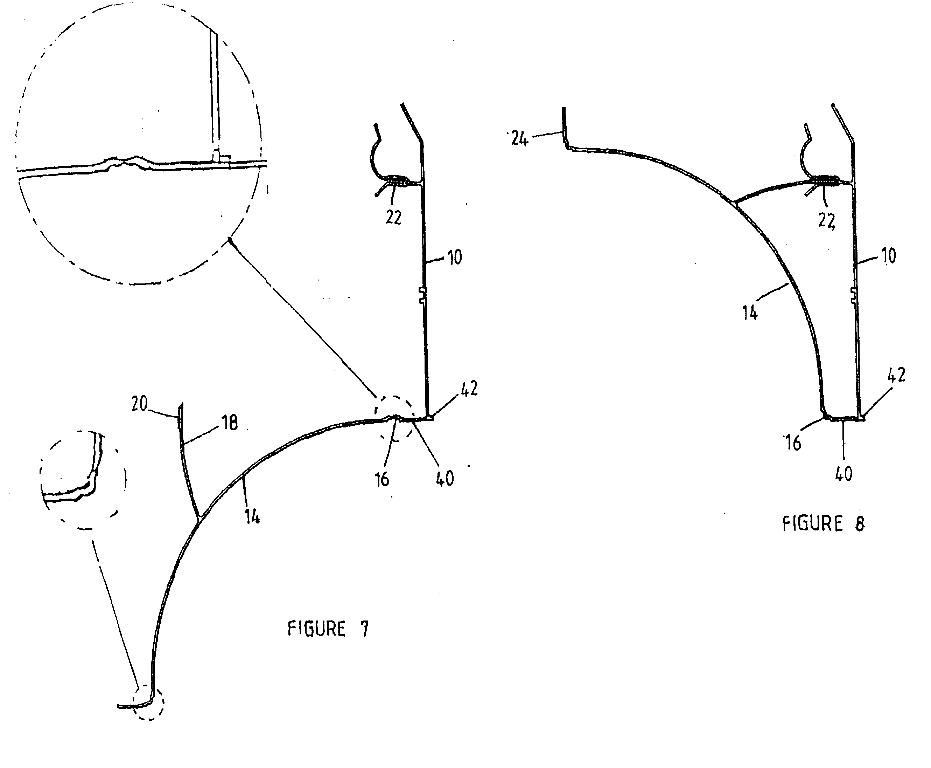

In Figures 7 and 8, cornice is shown. In this form of the invention, the front portion 14 is concavely arcuate and shaped formation 24 this time abuts the ceiling.

Once again flanges 40 and 42 are provided with a hinge Iccated at 16. The cornice opens and closes as described above with barbs 20 at the end of protrusion 18 engaging the channelled formation 22.

## Claims

1. An edging strip comprising a rear plate member adapted to be attached to a wall, the plate member being in hinged association with a shaped front portion including a rearwardly extending formation adapted to engage a complemental formation on the plate member.

2. Edging strip according to claim 1 in which the front portion also includes at a low level, a formation which abuts the floor for example if the invention is applied to skirting.

3. Edging strip according to claim 1 in which the rearwardly extending formation includes one or more hooked or barbed formations and is insertable into a complemental formation on the plate member comprising a channel.

4. Edging strip according to claim 3 in which the channel includes formations preventing removal of the inserted barbed formation.

5. Edging strip according to claim 4 in which both the rearwardly extending formation and the channel may include interengaging barbs on either side thereof.

6. Edging strip according to claim 4 in which the rearwardly extending formation and the channel include barbs on only one side thereof.

7. Edging strip according to claim 3 in which the depth of insertion of the barbed formation into the channel defines a separation distance between the front and rear portions, permitting introducing of electrical cabling or the like.

8. Edging strip according to any of the above claims in which the front and rear portions are integral and the hinged association comprises a longitudinal line of reduced thickness, the inherent flexibility of the polymeric material permitting the required degree of bending.

9. Edging strip according to claim 8 in which a reinforced section is proved adjacent to the line of reduced thickness.

10. Edging strip according to any of the above claims in which the hinged association is located at the top of the rear plate.

11. Edging strip according to claims 1 to 9 in which the rear plate includes a flange at the top end thereof, the flange being in hinged association with the front portion.

12. Edging strip according to any of the above claims in which a short rearwardly extending flange may also be provided in either form of the invention to ensure a perfect fit against the wall when the rear plate is secured thereto.

13. Edging strip according to any of the above claims, except claim 2, which finds particular application as a cornice, in which the front portion is concavely arcuate and this time a formation is provided which abuts the ceiling.

14. Edging strip according to any of the above claims comprises a suitable polymeric material.

15. Edging strip according to any of the above claims in which the plate member is provided with double-sided pressure sensitive adhesive tape to facilitate positioning.

16. Edging strip according to any of the above claims being one of a skirting, cornice or dado rail.
